## Europäisches Patentamt

(19) **European Patent Office**

**Office européen des brevets**

(11) Publication number: **0 001 652**
**B1**

(12) **EUROPEAN PATENT SPECIFICATION**

(45) Date of publication of patent specification: **24.02.82**

(21) Application number: **78200211.7**

(22) Date of filing: **26.09.78**

(51) Int. Cl.³: **A 01 D 25/00,·**
**A 01 D 33/08 //A01D27/00,**
**F 16D3/58 ·**

(54) **Root lifting device.**

(30) Priority: **25.10.77 NL 7711703**

(43) Date of publication of application:
**02.05.79 Bulletin 79/9**

(45) Publication of the grant of the patent:
**24.02.82 Bulletin 82/8**

(84) Designated Contracting States:
**BE DE FR GB NL**

(56) References cited:
**AT - B - 2 532 86**
**DE - A - 2 647 282**
**DE - B - 1 053 228**
**DE - U - 1 719 592**
**FR - E - 87 655**
**NL - A - 7 513 829**
**GB - A - 1 129 803**

(73) Proprietor: **Heyens, Eugène Joseph Eduardus**
**176, Zoutestraat**
**NL-4561 TC Hulst (NL)**

(72) Inventor: **Heyens, Eugène Joseph Eduardus**
**176, Zoutestraat**
**NL-4561 TC Hulst (NL)**

(74) Representative: **Hoorweg, Petrus Nicolaas et al,**
**OCTROOIBUREAU ARNOLD & SIEDSMA**
**Sweelinckplein 1**
**NL-2517 GK The Hague (NL)**

## Root lifting device

The invention relates to a device for lifting tuberous crops or the like, particularly beet, comprising a wheeled frame carrying at least three pairs of digging members for raising tubers out of the soil, behind at least one of said pairs one or more conveyors being arranged above soil-level for lateral displacement of the crop, each leading to an endless conveyor for feeding off and cleaning said tubers and each provided with crop engaging elements moving around from an active part to a return part of said conveyor, said return part being located behind said active part viewed in the travelling direction of the device.

Such a device is described in the Dutch patent application 7513829. With this known device is it intended to minimize the structural length in order to facilitate steerability of the device and thus to carry out the lifting operation more economically.

The invention has for its object to improve the known device set forth above by additional measures by which not only the structural length can be minimized by also lifting the tubers out of the soil and cleaning them are performed more effectively.

According to a first embodiment of the invention said lateral displacing conveyor is formed by a flexible member arranged at a certain distance above the soil and carrying downwardly protruding pins and guided around two return rollers having an upstanding roller axis.

In this case it may be advantageous to construct pins with a non-circular cross-section and to adapt each pin to be mounted so as to be adjustable about its longitudinal axis with respect to the flexible element. In this way the space between adjacent pins can be varied, which may be important for a given kind of tuberous crop to be lifted and for the conditions of the soil.

According to a second embodiment of the invention said lateral displacing conveyor is formed by a plurality of rotatably driven upstanding shafts arranged side by side, whereas said protruding pins are fastened to said shafts at different heights.

To obtain a further cleaning of the tubers the device is provided with a grating supported by the frame arranged above a rotating conveyor formed by two concentric annular members mutually connected by rods, said grating being supported above at least a part of the region enclosed by the inner angular member. Said grating may be fixed to the frame or may be oscillated respectively.

The invention will be explained more fully in the following detailed description.

In the drawing is:

Fig. 1 a side elevation of a first embodiment of the lifting device according to the invention,

Fig. 2 a plan view of the device according to Fig. 1,

Fig. 3 a front view of a detail of the lateral displacement conveyor in Fig. 2,

Fig. 4 a plan view of a second embodiment of the device according to the invention,

Fig. 5 a front view of a detail of the lateral displacement conveyor in Fig. 4.

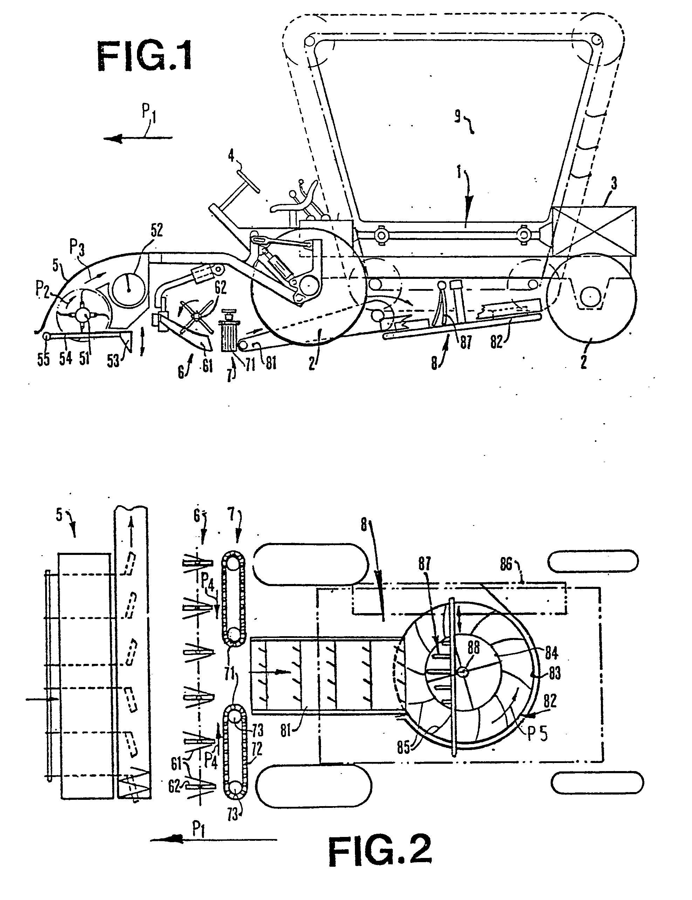

The device shown in Figs. 1 to 5 mainly comprises a frame 1 adapted to be moved on four wheels 2 on a field in the direction indicated by the arrow P 1. The device is propelled by an engine 3 driving the front wheels of the device, whereas the rear wheels can be steered by the steering wheel near the driver seat 4.

From left to right in Fig. 1 the frame 1 carried the following elements:

a combined stripping and topping device 5,

a digging section 6, a transverse conveying section 7 and a longitudinal conveying and sieve section 8 and finally on top of the frame there is mounted a bunker 9 for receiving the dug-up crop.

The left stripping section 5 (which is the subject of our European Patent Application No. 80201011.6 published with No. 0026960) mainly consists of a clapper rotor 51 rotating in the direction indicated by the arrow P 2 and serving to strike the leaves from the beet. The separated leaves arrive in the direction of the arrow P 3 at the leaf remover 52, which laterally conducts the leaves away and deposits them in a swath on the soil at the side of the machine.

The leaf stripper 5 comprises one or more cutting members 53, each of which is adapted to move up and down on a pivotal arm 54. The arm 54 is pivotable about a pivotal shaft 55 at the front of the leaf stripping section 5.

The digging section 6 comprises pairs of digging members 61 described in the above mentioned Dutch patent application 7513829. Each pair of digging members raises the beet out of the soil so that it will lie on the surface of the soil, whilst the separating members 62 raise the beet further upwards and transport it to the rear.

The separating members 62 may be disposed between the pairs of digging members 61 as well as between the digging members of a pair.

In the embodiment shown the section 7 conveying in a transverse direction is formed by two conveying elements located each behind those digging members which are located each behind those digging members which are located at the side of the conveying section 8 in the transport direction. The conveying elements 71 each consist of a sequence of vertically or substantially vertically extending tines moving along a closed path. On the side of the closed path of the vertical tines 71 facing the digging members 61 the beet raised above the soil will

be conveyed in the direction indicated by the arrow P 4 towards the centre of the device so that all beets arrise at the front of the conveying section 8.

In the transverse conveyors 7 the vertically extending tines 71 are fastened to an endless, flexible element 72, which is guided around two reversing elements 73 rotating about a vertical axis. One of the shafts of the reversing elements 73 is driven so that the tines will describe the compulsory path.

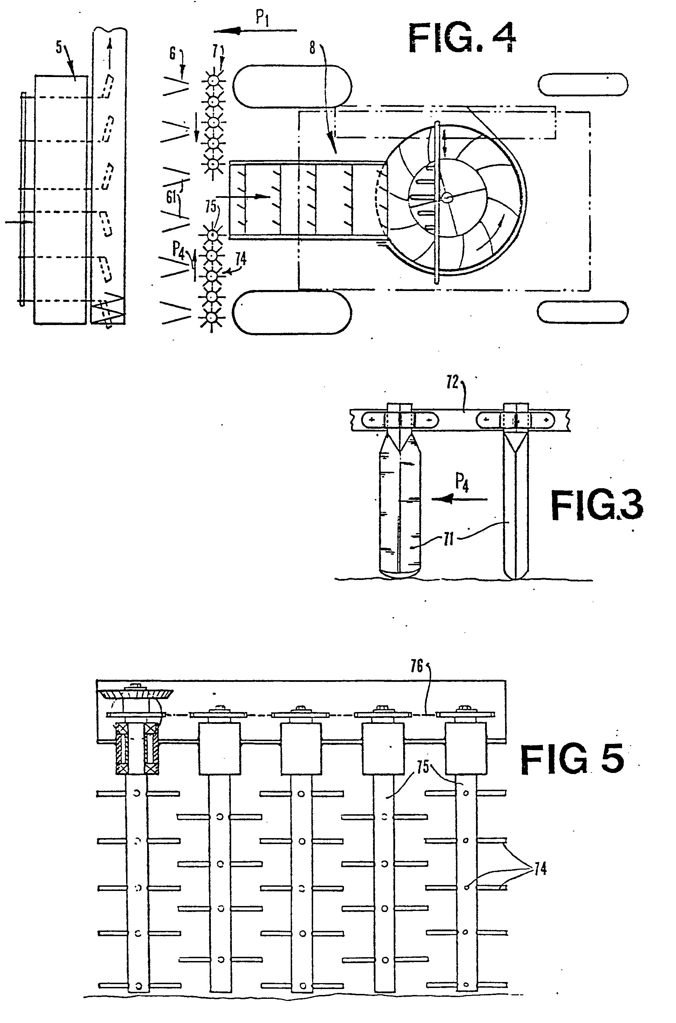

In a preferred embodiment the tines have a non-circular cross-section (see Fig. 3) so that the same tines can be mounted in two positions with respect to the flexible element 72 (see the difference in mounting on the left- and righthand sides of Fig. 3). Obviously both the resistance exerted by the soil and the distance between the tines can thus be varied at will.

The conveying section 8 is formed by an elevator 81, the front end of which joins the delivery ends of the transverse conveyors 7 and the rear end of which terminates above a rotating wheel 82 of the conveying section.

The elvator 81 may be constructed in any way and is formed in the embodiment shown by an endless belt, which preferably constitutes, in addition, a sieve belt in order to carry out a first separation between the crop and the earth.

The rotating wheel 82 is equipped with an outer rim 83 and a concentric inner rim 84. Between these two rims extend rod-like elements 85 substantially in a radial direction, which carry along the tubers in the direction indicated by the arrow P 5 (see Fig. 2) and deliver them on a conveying belt 86 lying out of the scope of this invention for transport to the bunker 9.

Above the region enclosed by the inner rim 84 a grating 87 is arranged, against which the tubers carried by the elevator 81 are thrown. By this grating an effective cleaning of the tubers is ensured, since the earth is pushed off the tubers as a result of the change in the direction of movement. The loosened earth can drop unhindered through the grating 87 across the region inside the inner rim 84, since only four spokes are arranged between the driving shaft 88 and the inner rim 84 for rotating the wheel around the shaft 88.

It will be obvious that the grating 87 may have any shape and can extend through the full region inside the inner rim 84.

Figs. 4 and 5 illustrate a second embodiment of the transverse conveying element. The pins moved along a closed path are formed in this case by radially directed groups of pins 74, each group being fastened to an upwardly extending rotatable shaft 75.

The shafts are all driven in the same sense by appropriate driving means, in this case a chain 76, so that on the side facing the digging members 61 the pins 74 again perform a conveying operation in the direction of the arrow P 4 in Fig. 4.

## Claims

1. A device for lifting tuberous crops or the like, particularly beet, comprising a wheeled frame (1) carrying at least three pairs of digging members (61) for raising tubers out of the soil, behind at least one of said pairs one or more conveyors (7) being arranged above soil-level for lateral displacement of the crop, each leading to an endless conveyor (81) for feeding off and cleaning said tubers and each provided with crop engaging elements moving around from an active part to a return part of said conveyor, said return part being located behind said active part viewed in the travelling direction of the device, characterized in that said lateral displacing conveyor is formed by a flexible member (72) arranged at a certain distance above the soil and carrying downwardly protruding pins and guided around two return rollers (73) having an upstanding roller axis.

2. A device as claimed in claim 1 characterized in that said pins (71) have a non-circular cross-section and are adjustable about their longitudinal axes with respect to said flexible member.

3. A device for lifting tuberous crops or the like, particularly beet, comprising a wheeled frame (1) carrying at least three pairs of digging members (61) for raising tubers out of the soil, behind at least one of said pairs one or more conveyors (7) being arranged above soil-level for lateral displacement of the crop, each leading to an endless conveyor for feeding off and cleaning said tubers and each provided with crop engaging elements moving around from an active part to a return part of said conveyor, said return part being located behind said active part viewed in the travelling direction of the device, characterized in that said lateral displacing conveyor is formed by a plurality rotatably driven upstanding shafts (75) arranged side by side, whereas said protruding pins (74) are fastened to said shafts at different heights.

4. A device as claimed in one of the previous claims, provided with a rotating conveyor (82) arranged behind said feed-off and cleaning conveyor (80), said rotating conveyor is formed by two concentric angular members (83), (84) mutually connected by rods (85), characterized in that a grating (87) supported by the frame is arranged above at least a part of the region enclosed by the inner angular member (84).

5. A device as claimed in claim 4, characterized in that the grating (87) is fixed to the frame of the device.

6. A device as claimed in claim 4, characterized in that the grating (87) is adapted for a shaking or oscillating movement.

## Revendications

1. Dispositif pour arracher les récoltes de plantes à tubercules ou équivalents, en particulier des betteraves, comprenant un châssis sur roues (1) portant au moins trois paires d'organes de retournement (61) servant à arracher les tubercules du sol, un ou plusieurs transporteurs (7) étant agencés derrière au moins l'une desdites paires, au-dessus du niveau du sol, pour le déplacement latéral de la récolte, chacun conduisant à un transporteur sans fin (81) servant à évacuer et à nettoyer les tubercules et chacun étant équipé d'éléments qui attaquent la récolte et circulent d'une partie active à une partie de retour dudit transporteur ladite partie de retour étant placée derrière ladite partie active, considéré dans le sens de la marche du dispositif, caractérisé en ce que ledit transporteur de déplacement latéral est formé par un élément flexible (72) disposé à une certaine distance au-dessus du sol et qui porte des tiges (71) en saillie vers le bas et est guidé autour de deux rouleaux de retour (73) ayant un axe à peu près vertical.

2. Dispositif suivant la revendication 1, caractérisé en ce que lesdites tiges (71) ont une section non circulaire et sont réglables autour de leurs axes longitudinaux par rapport audit élément flexible.

3. Dispositif pour arracher les récoltes de plantes à tubercules ou équivalents, en particulier les betteraves, comprenant un châssis sur roues (1) qui porte au moins trois paires d'organes de retournement (61) servant à arracher les tubercules du sol, un ou plusieurs transporteurs (7) étant disposé derrière au moins l'une desdites paires, au-dessus du niveau du sol, pour le déplacement latéral de la récolte, chacun conduisant à un transporteur sans fin servant à évacuer et à nettoyer les tubercules et chacun étant équipé d'éléments d'attaque de la récolte qui circulent d'une partie active à une partie de retour du transporteur, ladite partie de retour étant placée derrière la partie active, considéré dans le sens de la marche du dispositif, caractérisé en ce que ledit transporteur de déplacement latéral est formé de plusieurs arbres (74) à peu près verticaux, entraînés en rotation, disposés côte à côte, tandis que lesdites tiges saillantes (74) sont fixées auxdits arbres à différentes hauteurs.

4. Dispositif suivant l'une quelconque des revendications précédentes, équipé d'un transporteur tournant (82), agencé derrière ledit transporteur d'évacuation et de nettoyage (80), ledit transporteur tournant est composé de deux éléments annulaires concentriques (83, 84) reliés entre eux par des tiges (85), caractérisé en ce qu'une grille (87) supportée par le châssis est disposée au-dessus d'au moins une partie de la région enfermée par l'organe annulaire intérieur (84).

5. Dispositif suivant la revendication 4, caractérisé en ce que la grille (87) est fixée au châssis du dispositif.

6. Dispositif suivant la revendication 4, caractérisé en ce que la grille (87) est adaptée pour être animée d'un mouvement de secouage ou oscillant.

**Patentansprüche**

1. Vorrichtung zum Roden von Wurzelfrüchten oder dengleichen, insbesondere Rüben, versehen mit einem fahrbaren Gestell (1) zum Abstützen von mindestens drei Parr Rodenorganen (61) zum Ausheben der Wurzelfrüchte aus dem Boden, wobei hinter mindestens einem Paar Rodenorganen ein oder mehrere Föderer (7) über dem Boden zum Verlagern der Früchte in seitlicher Richtung angeordnet sind, wobei jeder der Förderer (7) zu einem endlosen Förderer (81) zum Abführen und Putzen der Wurzelfrüchte führt und wobei jeder Förderer (7) mit fruchterfassenden Elementen versehen ist, die sich von einem wirksamen Teil zu einem Rückführteil des Förderers herumbewegen, welcher Rückführteil — gesehen in Fortbewegungsrichtung der Vorrichtung — sich hinter dem wirksamen Teil befindet, dadurch gekennzeichnet, dass der in seitlicher Richtung verlagernde Förderer durch ein biegsames Organ (72) gebildet ist, das in einem bestimmten Abstand über dem Boden angeordnet ist, das abwärts vorstehende Stifte (71) trägt und das um zwei Rückkehrrollen (73) mit einer aufstehenden Rollenachse geführt ist.

2. Vorrichtung nach Anspruch 1, dadurch gekennzeichnet, dass die Stifte (71) einen unrunden Querschnitt besitzen und dem biegsamen Element gegenüber um ihre Längsachsenlinie verstellbar angeordnet sind.

3. Vorrichtung zum Roden von Wurzelfrüchten oder dengleichen, insbesondere Rüben, versehen mit einem fahrbaren Gestell (1), zum Abstützen von mindestens drei Paar Rodenorganen (61) zum Ausheben der Wurzelfrüchte aus dem Boden, wobei hinter mindestens einem Paar Rodenorganen ein oder mehrere Förderer (7) über dem Boden zum Verlagern der Früchte in seitlicher Richtung angeordnet sind, wobei jeder der Förderer (7) zu einem endlosen Förderer (81) zum Abführen und Putzen der Wurzelfrüchte führt und wobei jeder Förderer (7) mit fruchterfassenden Elementen versehen ist, die sich von einen wirksamen Teil zu einem Rückführteil des Förderers herumbewegen, welcher Rückführteil — gesehen in Fortbewegungsrichtung der Vorrichtung — sich hinter dem wirksamen Teil befindet, dadurch gekennzeichnet, dass der in seitlicher Richtung verlagernde Förderer durch mehrer rotierbar angetriebene aufstehende Achsen (75) gebildet ist, die Seite and Seite angeordnet sind, wobei die vorstehenden Stifte (74) in verschiedenen Höhen an den Achsen befestigt sind.

4. Vorrichtung nach einem der vorhergehenden Ansprüche, versehen mit einem rotierenden Förderer (82), der hinter dem Abfuhr- und Putzförderer (81) angeordnet ist, welcher rotierende Förderer durch zwei konzentrische, untereinander durch Stäbe (85) verbundene, ringförmige Organe (83, 84) gebildet ist, dadurch gekennzeichnet, dass ein durch das Gestell agbestützer Rost (87) deshalb mindestens eines Teiles des durch das innere ringförmige Organ (84) umschlossenen Bereich angeordnet ist.

5. Vorrichtung nach Anspruch 4, dadurch gekennzeichnet, dass der Rost (87) mit dem Gestell der Vorrichtung fest verbunden ist.

6. Vorrichtung nach Anspruch 4, dadurch gekennzeichnet, dass der Rost (87) in eine Schüttel-oder Vibrierbewegung versetzbar ist.

# FIG.1

# FIG.2

# FIG. 4

# FIG.3

# FIG 5